# EUROPEAN PATENT SPECIFICATION

(11) **EP 2 328 313 B1**
(45) Date of publication and mention of the grant of the patent: **20.08.2014**
(21) Application number: 09177529.6
(22) Date of filing: 30.11.2009
(51) Int. Cl.: H04L 27/233

(54) **Method and apparatus for demodulating differential binary phase shift keying modulated signals**
Verfahren und Vorrichtung zur Demodulation von DBPSK-modulierten Signalen
Procédé et appareil pour démoduler des signaux modulés à modulation en déphasage binaire différentiel

(43) Date of publication of application: 01.06.2011
(73) Proprietor: IHP GmbH-Innovations for High Performance Microelectronics / Leibniz-Institut für innovative Mikroelektronik, 15236 Frankfurt / Oder (DE)
(72) Inventor: Petri, Markus, 15232 Frankfurt (Oder) (DE); Grass, Eckhard Dr., 12589 Berlin (DE); Piz, Maxim, 10961 Berlin (DE)
(74) Representative: Eisenführ Speiser

(56) References cited:
- EP-A2- 1 791 312
- US-A1- 2007 018 717
- US-A1- 2007 024 477
- US-B1- 6 381 288
- WU P H: "The optimal BPSK demodulator with a 1-bit A/D front-end" MILITARY COMMUNICATIONS CONFERENCE, 1998. MILCOM 98. PROCEEDINGS., IEE E BOSTON, MA, USA 18-21 OCT. 1998, NEW YORK, NY, USA,IEEE, US LNKD- DOI:10.1109/MILCOM.1998.726920, vol. 3, 18 October 1998 (1998-10-18), pages 730-735, XP010307981 ISBN: 978-0-7803-4506-5
- XU CHANG QING ET AL: "A Digital Intermediate Frequency Demodulator for [pi]/4 DQPSK based on Hard Limiter" PERSONAL, INDOOR AND MOBILE RADIO COMMUNICATIONS, 2005. PIMRC 2005. IE EE 16TH INTERNATIONAL SYMPOSIUM ON BERLIN, GERMANY 11-14 SEPT. 2005, PISCATAWAY, NJ, USA,IEEE, vol. 4, 11 September 2005 (2005-09-11), pages 2586-2590, XP010928159 ISBN: 978-978-38007-2-4

## Description

### FIELD OF THE INVENTION

The present invention relates to a method, apparatus and computer program product for demodulating a differential binary phase shift keying (DBPSK) signal.

### BACKGROUND OF THE INVENTION

DPSK is a digital modulation technique that can be used to encode information in a signal prior to transmitting the signal to one or more receivers. In a DPSK modulated signal, information is carried by a transition between distinct digital states rather than absolute digital states. Specific DPSK modulation techniques include DBPSK and differential quadrature phase shift keying (DQPSK).

In DBPSK modulation, the phase of a constant amplitude carrier signal shifts between two positions, such as 0° and 180°. As such, two distinct digital states are provided, for example, a binary "0" state at 0° and a binary "1" state at 180°. Information is differentially encoded in the transition from one state to the next, and/or a lack of such a transition. As such, there is no need to recover or track the carrier signal within the receiver, as required quired in a receiver that is configured to demodulate conventional phase shift keyed signals. Instead, the receiver only needs to identify the relative phase shift between two adjacent bits to identify the information contained in a differentially encoded signal. This tends to simplify the design of the receiver. Thus, in case of a differential coding the phase of a preceding symbol is multiplied by the phase of a current symbol.

A typical receiver for a DBPSK signal may comprise an analog radio frequency (RF) front end in which the modulated received signal is converted from the RF band to the lower base band. The obtained base band signal is digitized by an analog-to-digital (A/D) converter and then processed further. However, it is possible, as well, to demodulate the differentially coded signal in the analog domain by providing additional circuitry or processing steps.

Differential coding can be advantageously used if no phase synchronisation is implemented between a transmitter and a receiver. However, determination of the phase difference requires sufficient resolution of the applied A/D conversion. If the DBPSK signal is quantized at only 1 bit, demodulation is no longer possible at a phase difference of about 90° or 270° between the transmitter and the receiver. Thus, DBPSK demodulation involves a problem in that either an analog determination of the phase difference at correspondingly higher circuit complexity or an A/D converter with sufficient resolution are required. Such A/D convert-er may be disadvantageous for systems with high data rates (e.g. >1Gbit/s) due to the relatively higher power consumption and circuit complexity, and it is therefore of limited use for cheap or battery power modules.

The document US 6,381,288 B1 discloses a method and apparatus for recovering data from a DBPSK signal, wherein the receiver demodulates the DBPSK signal by a quadrature demodulator into separate in-phase and quadrature-phase components which are converted into two digital signals using 2-bit A/D converters. Samples of these digital signals are then decoded according to a maximum likelihood criteria algorithm and decisions are made based on the signal constellation which identifies the original data transmitted.

US 2007/0018717 A1 discloses an evaluation device, which reproduces I- and Q-components by using channel estimation, wherein modulated data is reproduced from the I- and Q-components.

Wu describes in Milcom 98.proceedings, vol. 3, 18. October 1998, pages 730-735 a BPSK demodulator with a 1-bit A/D front-end, wherein the received signal is converted by a 1-bit A/D converter prior to the generation of the I- and Q-components. The maximum likelihood estimate is calculated separately for both I- and Q-components, while the value of the received BPSK signal is decided based on an addition of the process I- and Q-components.

US 2007/024477 A1 and Qing et al., IEEE 16th International Symposium on Personal, Indoor and Mobile Radio Communications, Berlin 11-14. September 2005, vol. 4, pages 2586-2590 disclose demodulator solutions, where the received signal is first digitized via a hard limiter and than separated into I- and Q-components.

US 6,381,288 B1 describes a demodulator for a DBPSK signal, wherein the I- and Q-components are separately sampled and than encoded according to a maximum likelihood criteria algorithm.

The document EP 1 791 312 A2 discloses a method for demodulating a DBPSK signal in accordance with the preamble of claim 1.

### SUMMARY OF THE INVENTION

It is therefore an object of the present invention to provide a simplified DBPSK demodulation technique with less circuit complexity and power consumption.

This object is achieved by a method for demodulating a DBPSK signalin accordance with claim 1.

Additionally, the above object is achieved by an apparatus for demodulating a DBPSK signal in accordance with claim 5.

Furthermore, the above object is achieved by computer program product comprising code means for carrying out the method steps of claim 1 when run on a computing device.

Accordingly, a separate 1-bit A/D conversion and subsequent demodulation processing is applied for each of the in-phase and quadrature-phase components, so that complex A/D converters are no longer required and the 1-bit quantized demodulation values can be used as input information to a maximum likelihood decoding operation of at least one decoder or a checksum calculation.

The combined consideration of the in-phase and quadrature-phase components allows conversion of the differentially decoded values to softbit values which include reliability considerations. Additionally, in embodiments of the method, the in-phase and quadrature-phase components can be used separately for deciding on the value of the DBPSK input signal based on a determined error rate or maximum likelihood decoding (such as for example Viterbi decoding).

The DBPSK signal is a received channel-coded signal, wherein channel coding may is based on a convolution code.

According to a first aspect, the decision on the value of the DBPSK signal may be achieved by applying maximum likelihood decoding with softbits as input metrics, wherein the softbits are generated by adding the processed in-phase component and the processed quadrature-phase component.

According to a second aspect, the decision on the value of the DBPSK signal may be performed by separately applying maximum likelihood decoding to the processed in-phase component and the processed quadrature-phase component, and deciding based on checksum calculations about validity of the obtained decoding results. According to a specific implementation, the checksum calculations may be performed for partial blocks of the processed in-phase and quadrature-phase components and deciding about the validity based on the partial blocks.

According to a third aspect, the decision on the value of the DBPSK signal may be performed by separately applying maximum likelihood decoding to the processed in-phase component, to the processed quadrature-phase component, and to a sum of the processed in-phase component and the processed quadrature-phase component, and deciding based on checksum calculations about validity of the obtained decoding results. In a specific implementation example, the checksum calculations may be performed for partial blocks.

According to a fourth aspect, the decision on the value of the DBPSK signal may be performed by separately applying a block code processing to partial blocks of the in-phase component and the quadrature-phase component and by deciding based on checksum calculations or a corrected number of errors about validity of decoding results.

In a specific implementation example, the decision about validity may be performed after each partial block.

Furthermore, in the above second to fourth aspects, the checksum calculations may be based on a cyclic redundancy code.

The claimed apparatus may be represented by a semiconductor chip, a chip set, or a hardware module comprising such chip or chip set. This, however, does not exclude the possibility that a functionality of an apparatus or module, instead of being hardware implemented, be implemented as software in a software module such as a computer program or a computer program product comprising executable software code portions for execution or being run on a processor.

### BRIEF DESCRIPTION OF THE DRAWINGS

The present invention will now be described on the basis of embodiments with reference to the accompanying drawings in which:
Fig. 1 shows a schematic block diagram of a demodulation apparatus according to various embodiments;
Fig. 2 shows a more detailed block diagram of a demodulation apparatus according to a first embodiment;
Fig. 3 shows a more detailed block diagram of a demodulation apparatus according to a second embodiment; and
Fig. 4 shows a more detailed block diagram of a demodulation apparatus according to a third embodiment.

### DESCRIPTION OF THE EMBODIMENTS

Exemplary embodiments of the present invention will now be described. Indeed, the invention may be embodied in many different forms and should not be constructed as limited to the embodiments set forth herein. Although the specification may refer to "an", "one" or "some" embodiment(s) in several locations, this does not necessarily mean that each such reference is to the same embodiment(s), or that the feature only applies to a single embodiment. Single features of different embodiments may also be combined to provide other embodiments. Like reference numerals refer to like elements throughout the following specification. Additionally, it is to be noted that the blocks described in the following block diagrams may be implemented as hardware circuits, software modules or a combination of both. Thus, the following block diagrams can be seen as illustrations of hardware devices or functional procedures for carrying out the proposed demodulation.

The embodiments are applicable to any receiver in any communication system or any combination of different communication systems in which DBPSK signals are transmitted.

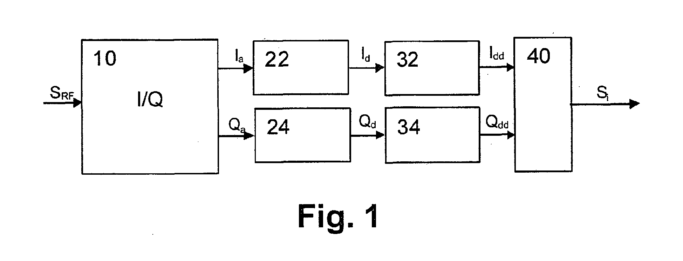

Fig. 1 shows a schematic block diagram of a demodulation circuit or procedure according to various embodiments. A DBPSK signal S_{RF} in the radio frequency (RF) domain or intermediate frequency (IF) domain as received from an RF front end of a receiver is supplied to a quadrature demodulator 10 configured to generate an analog in-phase component Iₐ and an analog quadrature-phase component Qₐ of the received DBPSK signal S_{RF}. The two demodulated components Iₐ and Qₐ are supplied to separate I and Q branches where they are separately processed. More specifically, the analog in-phase component Iₐ is supplied to a 1-bit A/D converter 22, which may be implemented as a simple comparator circuit, to generate a digital in-phase component I_{d} which could represent for example binary values, such as "1" or "0". Of course, other coding options can be used for the binary values. The 1-bit content may as well be interpreted as "+1" or "-1" or the like. This digital in-phase component I_{d} is then supplied to a differential decoder 32 where two subsequent symbols of the digital in-phase component I_{d} are processed to obtain a decoded digital in-phase component I_{dd}.

Similarly, in the lower Q branch the analog quadrature-phase component Qₐ is A/D converted in a 1-bit A/D converter 24, which may also be implemented as a simple comparator circuit, to generate a digital quadrature-phase component Q_{d} which is then supplied to a differential decoder 34 where two successive values of the digital quadrature-phase component Q_{d} are processed to obtain a decoded digital quadrature-phase component Q_{dd}. The two separate decoded digital in-phase and quadrature-phase components I_{dd} and Q_{dd} are supplied to a decision unit or functionality 40 which decides on the value of the received DBPSK signal S_{RF} based on maximum likelihood decoding of each component or a combination of the two components and/or a checksum calculation based on an error code provided in the received DBPSK signal S_{RF}. The output signal of the decision unit 40 is a binary information value Sᵢ which corresponds to the information which has been DBPSK-modulated on the carrier of the received DBPSK signal.

The use of the simple 1-bit A/D converters 22 and 24 enables a simple structure and easy processing in the decision unit based on maximum likelihood decoding and checksum calculation, since only one binary value has to be processed for every symbol or value. This is advantageous for example in high speed and high frequency applications which may be used in wireless communication systems, for example.

A suitable combination of the two 1-bit quantized and decoded input values I_{dd} and Q_{dd} of the decision unit 40 could be used for example as softbits for a maximum likelihood decoding such as for example a soft decision Viterby decoding. In this case, the softbits also contain information about the reliability of each received symbol. As an alternative, the decision unit 40 may incorporate a plurality of decoding units or functions, wherein a selection of one of the decoded data streams is performed based on a determined error rate.

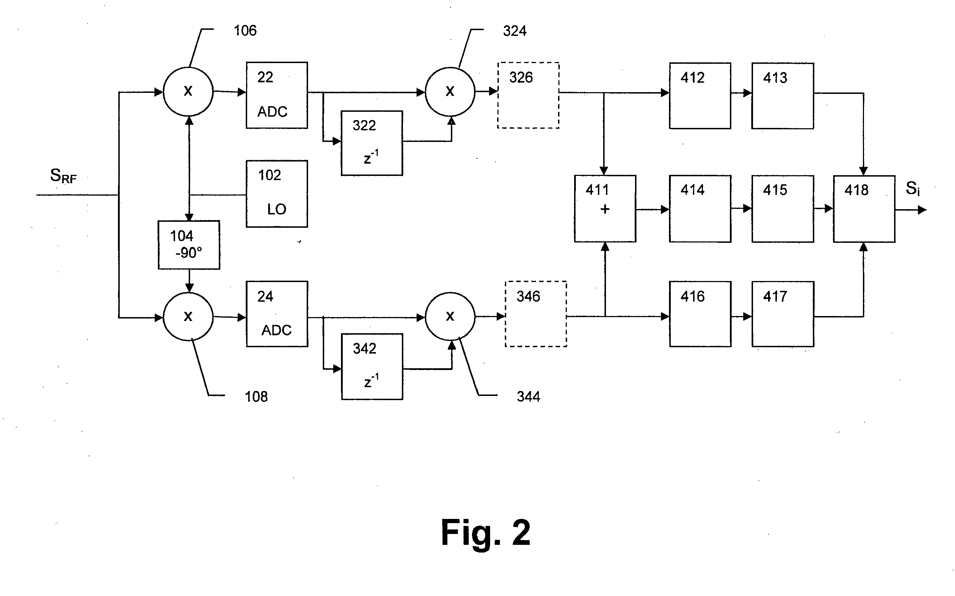

Fig. 2 shows a more detailed block or flow diagram of a DBPSK decoding approach according to a first embodiment.

As can be gathered from Fig. 2, the quadrature demodulator 10 can be implemented by using two multipliers 106, 108 which multiply an oscillation signal generated by a local oscillator (LO) 102 with the received DBPSK signal S_{RF}, wherein the lower multiplier 108 is supplied with a 90° phase-shifted version of the oscillation signal to obtain the analog quadrature-phase component. The phase shift is achieved by a phase shifting element or function 104. The multiplier in the upper branch or I branch generates the in-phase component which is separately processed in the I branch, while the quadrature-phase component is separately processed in the lower branch or Q branch.

The frequency of the oscillation signal of the local oscillator 102 depends on the carrier frequency of the received DBPSK signal S_{RF} (e.g. RF frequency range or IF frequency range) to obtain a down conversion of the in-phase and quadrature-phase components to base band level.

The obtained analog in-phase and quadrature phase components are supplied to respective 1-bit A/D converters (ADC) 22, 24 which may be implemented based on simple comparator circuits with a threshold level for distinguishing between the binary values "0" and "1". Accordingly, the output of the A/D converters 22, 24 corresponds to a sequence of binary values which correspond to the binary values signaled by the transition or non-transition between the two phases of the DBPSK signal S_{RF}. The respective digital in-phase and quadrature-phase components are supplied to respective differential decoders which comprise respective combiners 324, 344, which may be implemented as multipliers or logic elements (e.g. XNOR gates), and delay elements or functions 322, 342 which introduce a delay so that two successive binary values of the digital in-phase and quadrature-phase components can be simultaneously processed with each other by the respective combiner 324, 344. More specifically, the delay circuits 322, 342 may be implemented as storing elements for temporarily storing a bit value of the digitized in-phase and quadrature-phase components, respectively.

The output signals of the respective combiners 324, 344 may be supplied to optional deinterleaver circuits or functions 326, 346 which are configured to remove an interleaving structure introduced at the transmission side to improve transmission reliability.

The decoded digital in-phase and quadrature-phase components are then processed in three different maximum likelihood decoding functions or units 412, 414, 416 and subsequent checksum calculation units or functions 413, 415, 417 to provide different checksum results to a selection unit or function 418.

More specifically, the maximum likelihood decoding units 412, 416 of the I branch and Q branch, respectively may be configured to apply a hard-decision Viterbi decoding procedure, where the bit sequence of the digital decoded in-phase component and quadrature-phase component are respectively used as input signals. In the subsequent checksum calculation units 413, 417 of the I branch and Q branch the decoded bit pattern is subjected to a checksum calculation where a string of data bits are taken and added together and compared with a predetermined sum or a sum received from the transmitter to detect bit errors. In the middle branch, the bits of the digital decoded in-phase and quadrature-phase components are combined in a combination unit or function 411 and are then used as softbits input to a soft-decision Viterbi procedure of the maximum likelihood decoding unit 414. In this case, the combination of the in-phase and quadrature-phase components provides an additional information about the reliability of each received symbol depending on whether the bit values of the digital decoded in-phase and quadrature-phase components are equal or not. The output values of the soft-decision Viterbi procedure are supplied to the checksum calculation unit 415 which calculates a checksum. Based on the checksum calculations of the three branches, the selection unit 418 decides about the binary value of the demodulated information Sᵢ.

The checksum protection may be achieved by separating the transmitted data stream into partial blocks protected by a respective checksum. In this case, the data stream is processed at the transmitter by a convolution coding. At the demodulation circuit of Fig. 2, which is provided at the receiver side, the obtained I and Q branches are quantized by one bit. A phase difference is separately obtained in both branches at the output of the respective combiners 324, 344 and the channel code is decoded in the respective maximum likelihood decoding units 412, 416. The selection unit 418 may then select a partial block with matching checksum. In the third branch, a third maximum likelihood decoding is applied, wherein the metrics of the I and Q branches are combined to obtain softbits as input metric to the soft-decision Viterbi procedure.

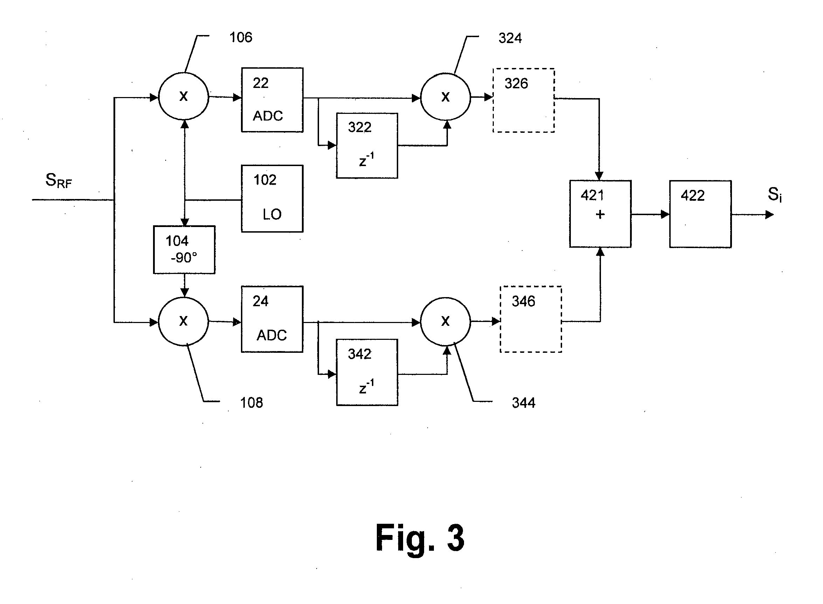

Fig. 3 shows a more detailed block diagram of a decoding approach according to a second embodiment, where the decision about the value of the received DBPSK signal is not achieved based on checksums, and only one maximum likelihood decoding unit 422 is used to which a combination of the metrics of the I and Q branch is used as softbit input for a soft-decision Viterbi procedure of the maximum likelihood decoding unit 422. The soft-decision Viterbi procedure provides a value of the modulated information Sᵢ of the received DBPSK signal S_{RF}.

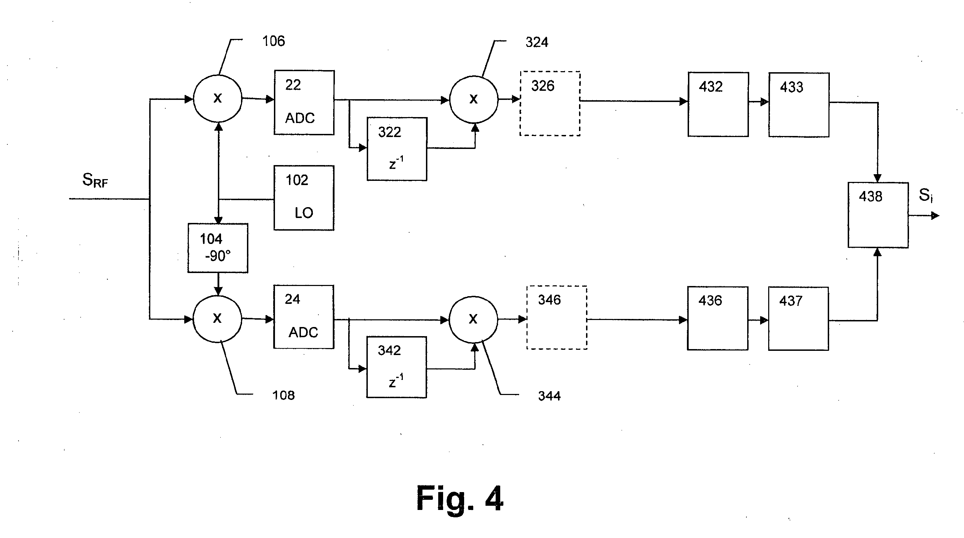

Fig. 4 shows a more detailed block diagram of a demodulating approach according to a third embodiment. In contrast to the first and second embodiment, the decision unit 40 now processes the data stream of the I and Q branches based on respective maximum likelihood decoding procedures in maximum likelihood decoding units or functions 432, 436 followed by respective checksum calculation units or functions 433, 437 without a combined third branch. Thereby, circuit complexity can be reduced. The two maximum likelihood decoding units 432, 436 can be based on hard-decision Viterbi decoding procedures for obtaining a channel-decoded bit sequence used for subsequent checksum calculation. A final selection unit or function 438 is then provided to select the partial block with matching checksum as base band modulation information Sᵢ.

It is noted that the above block diagrams of Figs. 2 to 4 only serve to provide a schematic overview of relevant functionalities, while usual or optional functionalities, such as low pass filters or pulse shaping functions have been omitted for reasons of brevity.

As an alternative to the above first to third embodiments, a block code could be used for channel coding, which is applied to the partial blocks enhanced by the checksum. Then, the decoding can be performed in different branches, wherein the checksum as well as the corrected number of errors can be used for selecting a valid partial block in the final selection unit.

As already mentioned, all or some of the blocks of Figs. 2 to 4 can be interpreted as software routines of a software-based implementation of the proposed demodulation device or apparatus. In this case, a control processor or computer device comprises a processing unit which may be any processor or processing device with a control unit which performs control based on software routines of a control program stored in a memory. Program code instructions are fetched from the memory and are loaded to the control unit of the processing unit in order to perform the processing steps of the above functionalities described in connection with Figs. 2 to 4. These processing steps may be performed on the basis of input data and may generate output data, wherein the input data may correspond to the received DBPSK signal S_{RF} or any signal between the blocks of Fig. 2 to 4. The output data may correspond to the obtained base band modulation information Sᵢ which reflects the demodulated data or any signal between the blocks of Fig. 2 to 4 for further processing. Thus, some or all of the proposed demodulation structures according to the first to third embodiment can be implemented as software routines or programs controlling a processor or computer device to perform the processing steps of the above functionalities.

To summarize, a method, apparatus and computer program product for demodulating a DBPSK signal have been described, wherein an in-phase component and a quadrature-phase component are generated from the DBPSK signal, and the in-phase component and quadrature-phase component are separately processed by applying 1-bit analog-to-digital conversion and subsequent differential decoding. Then, a decision on the value of the DBPSK signal is based on a combined consideration of at least one of a maximum likelihood decoding and checksum calculation of the processed in-phase and quadrature-phase components.

It is noted that the present invention is not restricted to the embodiments described above, but can be implemented in any demodulation circuit or procedure where maximum likelihood decoding can be used for decoding 1-bit quantized in-phase and quadrature-phase components.

## Claims

1. A method for demodulating a differential binary phase shift keying DBPSK signal, said method comprising the steps of:
- receiving a DBPSK signal that was channel-coded using a convolution code on the transmitter side;
- generating from said DBPSK signal (S_{RF}) an in-phase component (Iₐ) and a quadrature-phase component (Qₐ);
- separately processing said in-phase component (Iₐ) and said quadrature-phase component (Qₐ) by applying 1-bit analog-to-digital conversion, thus separately generating a single first bit representing a digital in-phase component (I_{d}) of said DBPSK signal and a single second bit representing a digital quadrature-phase component (Q_{d}) of said DBPSK signal;
**characterized by** subsequently
- separately performing differential decoding of
a) said digital in-phase component (I_{d}), wherein two successive single first bits of the digital in-phase component are processed to obtain a single-bit decoded digital in-phase component (I_{dd}), and
b) said digital quadrature-phase component (Q_{d}), wherein two successive single second bits of the digital quadrature-phase component are processed to obtain a single-bit decoded digital quadrature-phase component (Q_{dd});
- combining said single-bit decoded digital in-phase component (I_{dd}) and said single-bit decoded digital quadrature-phase component (Q_{dd}) to form a softbit signal indicative of not more than
i) bit values of the digital decoded in-phase (I_{dd}) and quadrature-phase (Q_{dd}) components, and
ii) whether the bit values are equal or not;
- deciding on a value of said DBPSK signal by performing a maximum likelihood decoding using a soft-decision Viterbi decoding procedure, wherein an input metric to the Viterbi decoding procedure is formed by the softbit signal; and
- separately applying maximum likelihood decoding to said decoded digital in-phase component (I_{dd}) and to said decoded digital quadrature-phase component (Q_{dd}), and subjecting decoded bit patterns of said in-phase and quadrature-phase components to checksum calculations,
- wherein deciding on a value of said DBPSK signal is based on the separate checksum calculations of the softbit signal, the decoded digital in-phase component (I_{dd}) and the decoded digital quadrature-phase component (Q_{dd}).

2. The method of claim 1, further comprising performing said checksum calculations for partial blocks of said processed in-phase and quadrature-phase components and deciding about said validity based on said partial blocks.

3. The method of claim 2, further comprising performing said decision about validity after each partial block.

4. The method of any one of claims 1 or 2, wherein said checksum calculation is based on a cyclic redundancy code.

5. An apparatus for demodulating a differential binary phase shift keying DBPSK signal, said apparatus comprising:
- receiving means for receiving a DBPSK signal that was channel-coded using a convolution code on the transmitter side;
- demodulation means (10) for generating from said DBPSK signal (S_{RF}) an in-phase component (Iₐ) and a quadrature-phase component (Qₐ); and
- processing means (22, 24, 32, 34) for separately processing said in-phase component and said quadrature-phase component by applying 1-bit analog-to-digital conversion, thus separately providing a single first bit representing a digital in-phase component (I_{d}) of said DBPSK signal and a single second bit representing a digital quadrature-phase component (Q_{d}) of said DBPSK signal;
**characterized in that**
- said processing means is additionally configured for subsequent differential decoding of
a) said digital in-phase component (I_{d}), **in that** two successive single first bits of the digital in-phase component are processed to obtain a single-bit decoded digital in-phase component (I_{dd}), and
b) said quadrature-phase component (Q_{d}), **in that** two successive single second bits of the digital quadrature-phase component are processed to obtain a single-bit decoded digital quadrature-phase component (Q_{dd});
- combination means (411; 421) for combining said single-bit decoded digital in-phase component (I_{dd}) and said single-bit decoded digital quadrature-phase component (Q_{dd}) to form a softbit signal indicative of not more than
i) bit values of the digital decoded in-phase (I_{dd}) and quadrature-phase (Q_{dd}) components, and
ii) whether the bit values are equal or not; and
- decision means (418) for deciding on a value of said DBPSK signal by
performing a maximum likelihood decoding using a soft-decision Viterbi decoding procedure, wherein an input metric to the Viterbi decoding procedure is formed by the softbit signal;
separately applying maximum likelihood decoding to said decoded digital in-phase component (Idd) and to said decoded digital quadrature-phase component (Qdd), and subjecting decoded bit patterns of said in-phase and quadrature-phase components to checksum calculations;
wherein deciding on a value of said DBPSK signal is based on the separate checksum calculations of the softbit signal, the decoded digital in-phase component (Idd) and the decoded digital quadrature-phase component (Qdd).

6. A computer program product comprising code means for carrying out the steps of the method of claim 1 when run on a computing device.

## Patentansprüche

1. Verfahren zum Demodulieren eines differenziellen binären Phasenumtastungs-, DBPSK-Signals, umfassend die Schritte:
- Empfangen eines DBPSK-Signals, das unter Verwendung eines Faltungscodes auf der Senderseite kanalkodiert wurde;
- Erzeugen einer Inphasenkomponente (Iₐ) und einer Quadraturphasenkomponente (Qₐ) aus dem DBPSK-Signal (S_{RF});
- Getrenntes Verarbeiten der Inphasenkomponente (Iₐ) und dieser Quadraturphasenkomponente (Qₐ) durch Anwenden einer 1-Bit-Analog-Digital-Umwandlung, demzufolge getrenntes Erzeugen eines einzelnen ersten Bit, das eine digitale Inphasenkomponente (I_{d}) des DBPSK-Signals repräsentiert und eines einzelnen zweiten Bit, das eine digitale Quadraturphasenkomponente (Q_{d}) des DBPSK-Signals repräsentiert;
**gekennzeichnet durch** nachfolgendes
- getrenntes Durchführen differenzieller Dekodierung
a) der digitalen Inphasenkomponente (I_{d}), wobei zwei aufeinanderfolgende einzelne erste Bits der digitalen Inphasenkomponente verarbeitet werden, um eine dekodierte digitale Einzelbit-Inphasenkomponente (D_{dd}) zu erhalten und
b) der digitalen Quadraturphasenkomponente (Q_{d}), wobei zwei aufeinanderfolgende einzelne zweite Bits der digitalen Quadraturphasenkomponente verarbeitet werden, um eine dekodierte digitale Einzelbit-Quadraturphasenkomponente (Q_{dd}) zu erhalten;
- Kombinieren der dekodierten digitalen Einzelbit-Inphasenkomponente (I_{dd}) und der dekodierten digitalen Einzelbit-Quadraturphasenkomponente (Q_{dd}), um ein Softbitsignal zu bilden, welches nicht mehr anzeigt als
i) Bitwerte der digitalen dekodierten Inphasen (I_{dd}) und Quadraturphasen- (Q_{dd}) Komponenten und
ii) ob die Bitwerte gleich sind oder nicht;
- Entscheiden über einen Wert des DBPSK-Signals **durch** Durchführen einer Maximum-Likelihood-Dekodierung unter Verwendung einer Soft-Decision-Viterbi-Dekodierungsprozedur, wobei eine Eingangsmetrik zu der Viterbi-Dekodierungsprozedur **durch** das Softbitsignal gebildet wird; und
- getrenntes Anwenden der Maximum-Likelihood-Dekodierung auf die dekodierte digitale Inphasenkomponente (I_{dd}) und auf de dekodierte digitale Quadraturphasenkomponente (Q_{dd}), und Anwenden von Prüfsummenberechnungen auf dekodierte Bitmuster der Inphasen- und Quadraturphasenkomponenten,
- wobei das Entscheiden über einen Wert des DBPSK-Signals auf den separaten Prüfsummenberechnungen des Softbitsignals, der dekodierten digitalen Inphasenkomponente (I_{dd}) und der dekodierten digitalen Quadraturphasenkomponente (Q_{dd}) beruht.

2. Verfahren gemäß Anspruch 1, zusätzlich umfassend Durchführen der Prüfsummenberechnungen für Teilblocks der verarbeiteten Inphasen- und Quadraturphasenkomponenten und Entscheiden über die Gültigkeit auf Grundlage der Teilblocks.

3. Verfahren nach Anspruch 2, zusätzlich umfassend Durchführen der Entscheidung über die Gültigkeit nach jedem Teilblock.

4. Verfahren nach einem der Ansprüche 1 oder 2, bei dem die Prüfsummenberechnung auf einem zyklischen Redundanzcode beruht.

5. Vorrichtung zum Demodulieren eines differenziellen binären Phasenumtastungs-DBPSK-Signals umfassend:
- Empfangsmittel zum Empfangen eines DBPSK-Signals, das unter Verwendung eines Faltungscodes auf der Senderseite kanalkodiert wurde;
- Demodulationsmitel (10) zum Erzeugen einer Inphasenkomponente (Iₐ) und einer Quadraturphasenkomponente (Qₐ) aus dem DBPSK-Signal (S_{RF});
- Verarbeitungsmittel (22, 24, 32, 34) zum getrennten Verarbeiten der Inphasenkomponente (Iₐ) und der Quadraturphasenkomponente (Qₐ) durch Anwenden einer 1-Bit-Analog-Digital-Umwandlung, demzufolge getrenntes Erzeugen eines einzelnen ersten Bit, das eine digitale Inphasenkomponente (I_{d}) dieses DBPSK-Signals repräsentiert und eines einzelnen zweiten Bit, das eine digitale Quadraturphasenkomponente (Q_{d}) des DBPSK-Signals repräsentiert;
**dadurch gekennzeichnet dass**
- das Verarbeitungsmittel ausgebildet ist zur nachfolgenden differenziellen Dekodierung
a) der digitalen Inphasenkomponente (I_{d}), wobei zwei aufeinanderfolgende einzelne erste Bits der digitalen Inphasenkomponente verarbeitet werden, um eine dekodierte digitale Einzelbit-Inphasenkomponente (D_{dd}) zu erhalten und
b) der digitalen Quadraturphasenkomponente (Q_{d}), wobei zwei aufeinanderfolgende einzelne zweite Bits der digitalen Quadraturphasenkomponente verarbeitet werden, um eine dekodierte digitale Einzelbit-Quadraturphasenkomponente (Q_{dd}) zu erhalten;
- Kombinationsmittel zum Kombinieren der dekodierten digitalen EinzelbitInphasenkomponente (I_{dd}) und der dekodierten digitalen Einzelbit-Quadraturphasenkomponente (Q_{dd}), um ein Softbitsignal zu bilden, welches nicht mehr anzeigt als
i) Bitwerte der digitalen dekodierten Inphasen (I_{dd}) und Quadraturphasen- (Q_{dd}) Komponenten und
ii) ob die Bitwerte gleich sind oder nicht;
- Entscheidungsmittel zum Entscheiden über den Wert des DBPSK-Signals durch Durchführen einer Maximum-Likelihood-Dekodierung unter Verwendung einer Soft-Decision Viterbi-Dekodierungsprozedur, wobei eine Eingangsmetrik zu der Viterbi-Dekodierungsprozedur durch das Softbitsignal gebildet wird;
getrenntes Anwenden der Maximum-Likelihood-Dekodierung auf die dekodierte digitale Inphasenkomponente (I_{dd}) und auf die dekodierte digitale Quadraturphasenkomponente (Q_{dd}), und Anwenden von Prüfsummenberechnungen auf Bitmuster dieser Inphasen- und Quadraturphasenkomponenten ,
wobei das Entscheiden über einen Wert des DBPSK-Signals auf den separaten Prüfsummenberechnungen des Softbitsignals, der dekodierten digitalen Inphasenkomponente (I_{dd}) und der dekodierten digitalen Quadraturphasenkomponente (Q_{dd}) beruht.

6. Ein Computerprogrammprodukt, umfassend Codemittel zum Durchführen der Schritte des Verfahrens nach Anspruch 1, wenn das Computerprogrammprodukt auf einem Computer läuft.

## Revendications

1. Procédé de démodulation d'un signal de modulation binaire différentielle par déplacement de phase, DBPSK, ledit procédé comprenant les étapes ci-dessous consistant à :
- recevoir un signal de modulation DBPSK qui a été codé au niveau du canal en utilisant un code de convolution côté émetteur ;
- générer, à partir dudit signal de modulation DBPSK (S_{RF}), une composante en phase (Iₐ) et une composante en quadrature de phase (Qₐ);
- traiter séparément ladite composante en phase (Iₐ) et ladite composante en quadrature de phase (Qₐ), en appliquant une conversion analogique à numérique de 1 bit, ce qui permet par conséquent de générer séparément un premier bit unique représentant une composante en phase numérique (I_{d}) dudit signal de modulation DBPSK et un second bit unique représentant une composante en quadrature de phase numérique (Q_{d}) dudit signal de modulation DBPSK ;
**caractérisé par** l'étape subséquente consistant à :
- mettre en oeuvre séparément un décodage différentiel de :
a) ladite composante en phase numérique (I_{d}), dans lequel deux premiers bits uniques successifs de la composante en phase numérique sont traités en vue d'obtenir une composante en phase numérique décodée à bit unique (I_{dd}) ; et
b) ladite composante en quadrature de phase numérique (Q_{d}), dans lequel deux seconds bits uniques successifs de la composante en quadrature de phase numérique sont traités en vue d'obtenir une composante en quadrature de phase numérique décodée à bit unique (Q_{dd}) ;
- combiner ladite composante en phase numérique décodée à bit unique (I_{dd}) et ladite composante en quadrature de phase numérique décodée à bit unique (Q_{dd}) en vue de former un signal de bit logique indicatif, tout au plus :
i) des valeurs de bits des composantes en phase (I_{dd}) et en quadrature de phase (Q_{dd}) décodées numériques ; et
ii) du fait que les valeurs de bits sont identiques ou non ;
- déterminer une valeur dudit signal de modulation DBPSK en mettant en oeuvre un décodage par maximum de vraisemblance faisant appel à une procédure de décodage de Viterbi à décision douce, dans lequel une métrique d'entrée dans la procédure de décodage de Viterbi est formée par le signal de bit logique ; et
- appliquer séparément le décodage par maximum de vraisemblance à ladite composante en phase numérique décodée (I_{dd}) et à ladite composante en quadrature de phase numérique décodée (Q_{dd}), et soumettre les motifs de bits décodés desdites composantes en phase et en quadrature de phase à des calculs de somme de contrôle ;
- dans lequel la détermination d'une valeur dudit signal de modulation DBPSK est basée sur les calculs de somme de contrôle individuels du signal de bit logique, sur la composante en phase numérique décodée (I_{dd}) et sur la composante en quadrature de phase numérique décodée (Q_{dd}).

2. Procédé selon la revendication 1, comprenant en outre l'étape consistant à mettre en oeuvre lesdits calculs de somme de contrôle pour des blocs partiels desdites composantes en phase et en quadrature de phase traitées, et à déterminer ladite validité sur la base desdits blocs partiels.

3. Procédé selon la revendication 2, comprenant en outre l'étape consistant à mettre en oeuvre ladite détermination de validité après chaque bloc partiel.

4. Procédé selon l'une quelconque des revendications 1 ou 2, dans lequel ledit calcul de somme de contrôle est basé sur un code de redondance cyclique.

5. Appareil destiné à démoduler un signal de modulation binaire différentielle par déplacement de phase, DBPSK, ledit appareil comprenant :
- un moyen de réception pour recevoir un signal de modulation DBPSK qui a été codé au niveau du canal en utilisant un code de convolution côté émetteur ;
- un moyen de démodulation (10) pour générer, à partir dudit signal de modulation DBPSK (S_{RF}), une composante en phase (Iₐ) et une composante en quadrature de phase (Qₐ) ; et
- un moyen de traitement (22, 24, 32, 34) pour traiter séparément ladite composante en phase et ladite composante en quadrature de phase, en appliquant une conversion analogique à numérique de 1 bit, ce qui permet par conséquent de fournir séparément un premier bit unique représentant une composante en phase numérique (I_{d}) dudit signal de modulation DBPSK et un second bit unique représentant une composante en quadrature de phase numérique (Q_{d}) dudit signal de modulation DBPSK ;
**caractérisé en ce que** :
- ledit moyen de traitement est en outre configuré en vue d'un décodage différentiel subséquent de :
a) ladite composante en phase numérique (I_{d}), **en ce que** deux premiers bits uniques successifs de la composante en phase numérique sont traités en vue d'obtenir une composante en phase numérique décodée à bit unique (I_{dd}) ; et
b) ladite composante en quadrature de phase numérique (Q_{d}), **en ce que** deux seconds bits uniques successifs de la composante en quadrature de phase numérique sont traités en vue d'obtenir une composante en quadrature de phase numérique décodée à bit unique (Q_{dd}) ;
- un moyen de combinaison (411 ; 421) pour combiner ladite composante en phase numérique décodée à bit unique (I_{dd}) et ladite composante en quadrature de phase numérique décodée à bit unique (Q_{dd}) en vue de former un signal de bit logique indicatif, tout au plus :
i) des valeurs de bits des composantes en phase (I_{dd}) et en quadrature de phase (Q_{dd}) décodées numériques ; et
ii) du fait que les valeurs de bits sont identiques ou non ; et
- un moyen de détermination (418) pour déterminer une valeur dudit signal de modulation DBPSK :
en mettant en oeuvre un décodage par maximum de vraisemblance faisant appel à une procédure de décodage de Viterbi à décision douce, dans lequel une métrique d'entrée dans la procédure de décodage de Viterbi est formée par le signal de bit logique ; et
en appliquant séparément le décodage par maximum de vraisemblance à ladite composante en phase numérique décodée (I_{dd}) et à ladite composante en quadrature de phase numérique décodée (Q_{dd}), et en soumettant les motifs de bits décodés desdites composantes en phase et en quadrature de phase à des calculs de somme de contrôle ;
dans lequel la détermination d'une valeur dudit signal de modulation DBPSK est basée sur les calculs de somme de contrôle individuels du signal de bit logique, sur la composante en phase numérique décodée (I_{dd}) et sur la composante en quadrature de phase numérique décodée (Q_{dd}).

6. Produit-programme informatique comprenant un moyen de code pour mettre en oeuvre les étapes du procédé selon la revendication 1, lorsqu'il est exécuté sur un dispositif informatique.
